# EUROPÄISCHE PATENTANMELDUNG

(11) **EP 2 439 712 A1**
(43) Veröffentlichungstag der Anmeldung: **11.04.2012**
(21) Anmeldenummer: 11183318.2
(22) Anmeldetag: 29.09.2011
(51) Int. Cl.: G08G 1/01, G08G 1/017, G06K 17/00, B60C 23/00

(54) **Verfahren und Vorrichtung zur Detektion von Kraftfahrzeugen in einem Verkehrsnetz**

(30) Priorität: 07.10.2010 DE 102010047566
(71) Anmelder: Deutsches Zentrum für Luft- und Raumfahrt e.V., 51147 Köln (DE)
(72) Erfinder: Schulz, Jan, 12437 Berlin (DE); Bretschneider, Eike, 3002 Purkersdorf (AT)
(74) Vertreter: Patentanwälte Bressel und Partner

(57) **Zusammenfassung**

Die Erfindung betrifft ein Verfahren und eine Vorrichtung zur Detektion von Kraftfahrzeugen (2) in einem Verkehrsnetz (1), wobei die Kraftfahrzeuge (2) mindestens teilweise mit Reifendrucküberwachungssensoren ausgebildet sind und/oder mobile Empfangseinheiten (7) sich im Verkehrsnetz (1) bewegen und Signale der Reifendrucküberwachungssensoren der Kraftfahrzeuge (2) erfassen, wobei entlang des Verkehrsnetzes (1) lokale Empfangseinheiten (3) für die Signale der Reifendrucküberwachungssensoren angeordnet sind, wobei anhand der Signale die Kraftfahrzeuge (2) detektiert und mindestens ein Verkehrsparameter ermittelt wird.

## Beschreibung

Die Erfindung betrifft ein Verfahren und eine Vorrichtung zur Detektion von Kraftfahrzeugen in einem Verkehrsnetz.

Zur Verkehrssteuerung sind Informationen über das Verkehrsgeschehen Grundvoraussetzung. Das Verkehrsgeschehen wird dabei durch Kenngrößen bzw. Verkehrsparameter charakterisiert. Auf deren Grundlage werden Handlungen für die Regelung des Verkehrsablaufs abgeleitet. Ein Großteil der am Markt vorhandenen klassischen Sensoren ist dabei nur in der Lage, Verkehrsstärke und Verkehrsgeschwindigkeit zu bestimmen. Mit der Technologie Induktionsschleife ist darüber hinaus eine zuverlässige Klassifizierung nach beispielsweise Fahrzeugklassen möglich. Eine solche Klassifikation ist mit vielen anderen Sensoren, wie beispielsweise Radar-, Infrarot-, Schlauch- oder Magnetfeldsensoren, nicht zuverlässig oder überhaupt nicht möglich. Alle diese Sensoren haben jedoch eins gemeinsam: Sie können keine Fahrzeuge eindeutig wiedererkennen. Anhand der Detektorwerte klassischer Sensorik ist es somit nicht möglich, die Route eines Fahrzeugs zu bestimmen und die Reisezeit von A nach B durch das Verkehrswegenetz abzuleiten.

Mit dem Verfahren der automatischen Nummernschilderkennung (ANPR/LPR) können einzelne Fahrzeuge anhand ihrer eindeutigen Kennung auf dem Nummernschild wiedererkannt werden und u.a. die oben genannten Größen abgeleitet werden. Die Fahrzeuge müssen weder mit besonderen Ortungs- oder Kommunikationseinrichtungen oder Transpondern ausgestattet werden, jedoch unterliegt das Verfahren strengen Datenschutzrichtlinien und ist in Deutschland für die Gewinnung von Verkehrsinformationen nicht zugelassen. Ein weiteres stationäres Verfahren, das die Verfolgung von Einzelfahrzeugen ermöglicht, basiert auf RFID-Tags. Bei diesem kooperativen Verfahren muss ein Fahrzeug mit einem RFID-Chip ausgestattet sein und straßenseitig eine Infrastruktur bereit stehen, die die Kennung der Fahrzeuge auslesen kann. Eine weitere Möglichkeit, bei dem Einzelfahrzeugdaten vorliegen, ist die mobile Verkehrsdatenerfassung über Floating Cars, also im Verkehr mitschwimmende Fahrzeuge. Diese Fahrzeuge, häufig werden Taxis dafür genutzt, sind mit einer Ortungs- und Kommunikationseinheit ausgerüstet, um ihre Position an die Verkehrsmanagementzentrale übermitteln zu können.

Zusammenfassend lässt sich feststellen, dass viele Sensoren im Stand der Technik keine (individuellen) Einzelfahrzeugdaten erfassen können oder aber datenschutzrechtliche Probleme eine Einzelfahrzeugdatenerfassung verhindern.

Aus der DE 10 2009 009 627 A1 ist ein Reifendrucküberwachungssystem (tire pressure monitoring system, TPMS) bekannt, die auch als Reifendruckkontrollsysteme (RDKS) bezeichnet werden. Das Reifendrucküberwachungssystem umfasst mehrere Reifendrucküberwachungssensoren, die drahtlos, vorzugsweise als HF-Signale, ihren Reifendruck an einen fahrzeugseitigen Empfänger übertragen. Dabei übertragen üblicherweise die einzelnen Reifendrucküberwachungssensoren eine Kennung, einen Reifendruck und eine Temperatur an den Empfänger.

Der Erfindung liegt das technische Problem zugrunde, ein Verfahren und eine Vorrichtung zur Detektion von Kraftfahrzeugen in einem Verkehrsnetz zu schaffen, mittels derer eine hohe Detektionsrate erreichbar ist, wobei der Installationsaufwand gering sein sollte und keine oder kaum Substanzeingriffe in die vorhandenen Verkehrsnetze erfordern soll.

Die Lösung des technischen Problems ergibt sich durch die Gegenstände mit den Merkmalen der Ansprüche 1 und 10. Weitere vorteilhafte Ausgestaltungen ergeben sich aus den Unteransprüchen.

Das Verfahren bzw. die Vorrichtung zur Detektion von Kraftfahrzeugen in einem Verkehrsnetz, wobei die Kraftfahrzeuge mindestens teilweise mit Reifendrucküberwachungssensoren ausgebildet sind, umfasst entlang des Verkehrsnetzes angeordnete lokale Empfangseinheiten für die Signale der Reifendrucküberwachungssensoren und/oder mobile Empfangseinheiten, die sich im Verkehrsnetz bewegen und Signale der Reifendrucküberwachungssensoren der Kraftfahrzeuge erfassen, wobei anhand der Signale die Kraftfahrzeuge detektiert und mindestens ein Verkehrsparameter ermittelt wird. Die Verkehrsparameter können dabei Reisezeit und/oder Verkehrsdichte und/oder Verkehrsstärke und/oder Geschwindigkeit und/oder Zeitlücke und/oder Rückstau und/oder Belegungszeit sein. Die Installation der lokalen Empfangseinheiten erfordert keine Substanzeingriffe in das Straßennetz. Auch die mobilen Empfangseinheiten erfordern keine Substanzeingriffe. Den mobilen Empfangseinheiten sind vorzugsweise Positionseinheiten zugeordnet, mittels derer die Position der mobilen Einheiten und damit der detektierten Kraftfahrzeuge ermittelbar ist.

Diese können einfach als separate Boxen installiert werden. Aufgrund der Tatsache, dass bereits eine Vielzahl moderner Kraftfahrzeuge mit derartigen Reifendrucküberwachungssensoren ausgestattet ist, ist bereits gegenwärtig eine gute Abdeckung gewährleistet. Da laut EU-Gesetzgebung alle Fahrzeugarten, die nach dem 01.11.2012 typengenehmigt werden sowie alle nach dem 01.11.2014 hergestellten Kraftfahrzeuge mit TPMS-System ausgestattet werden müssen, sind somit zukünftig Abdeckungsraten von nahezu 100 % denkbar.

Der Vorteil des beschriebenen Verfahrens liegt zum einen in der theoretischen Leistungsfähigkeit, nahezu jedes Einzelfahrzeug (→ 100 % der passierenden Fahrzeuge) zu erfassen (im Gegensatz zu drahtlosen Verfahren mit Bluetooth), dabei unabhängig von beispielsweise Witterungsbedingungen oder Verdeckungen (im Gegensatz zu Verfahren mit Videotechnik) zu sein, und zum anderen ein Verfahren zu nutzen, das keine Verknüpfung zwischen Identifikationsnummer und Fahrzeughalter zulässt (im Gegensatz zu ANPR). Ein weiterer Vorteil des Verfahrens liegt darin begründet, dass die Identifikationsnummer eindeutig einem Kraftfahrzeug zugeordnet werden kann. Bei drahtlosen Verfahren, die beispielsweise Bluetooth nutzen, ist dies nicht ohne weiteres möglich, da Bluetooth-Geräte theoretisch von jedem Verkehrsteilnehmer (Autofahrer, Mitfahrer, ÖPNV-Nutzer, Fahrradfahrer, Spaziergänger) mitgeführt werden können oder eben auch nicht, aber auch Bluetooth-Peripheriegeräte (Drucker, Tastaturen, Computermäuse) mit ihren jeweiligen Identifikationsnummern erkannt werden. Ein zusätzliches Verfahren, das die Identifikationsnummern unterschiedlicher Verkehrsteilnehmer filtert und diesen zuordnet, ist für das hier beschriebene Verfahren nicht extra notwendig. Ein weiterer Vorteil ist, dass aufgrund der Tatsache, dass jedem Reifen ein Sensor zugeordnet ist, eine mehrfache Redundanz existiert.

In einer Ausführungsform sind die Empfangseinheiten untereinander und/oder über eine Zentrale miteinander vernetzt, wobei aus den Signalen der Reifendrucküberwachungssensoren eine Kennung eines Kraftfahrzeuges ermittelbar ist, wobei durch eine Nachverfolgung der Kennung durch die Empfangseinheiten eine Route des Kraftfahrzeuges ermittelbar ist. Bei Berücksichtigung der Zeit lassen sich zusätzlich Reisezeit und/oder mittlere Geschwindigkeit des Kraftfahrzeuges ableiten.

In einer weiteren Ausführungsform sind den Empfangseinheiten Sendeeinheiten zugeordnet, die ein Triggersignal an die Reifendrucküberwachungssensoren übertragen, damit diese zu einem gewünschten Zeitpunkt ihre Daten übertragen. Üblicherweise senden die Reifendrucküberwachungssensoren periodisch ihre Daten an den kraftfahrzeugseitigen Empfänger, wobei die Frequenz nicht zu hoch gewählt wird, um Energie des lokalen Energiespeichers der Sensorik zu sparen. Durch das Triggersignal kann sichergestellt werden, dass die Reifendrucküberwachungssensorik innerhalb der Reichweite der lokalen Empfangseinheiten mindestens einmal ihre Daten sendet.

In einer weiteren Ausführungsform sind den Empfangseinheiten Infrarot-Sensoren zur Erfassung einer Reifendrucktemperatur zugeordnet. Ist nämlich der Luftdruck zu gering, hat dies mehr Walgarbeit zur Folge, was wiederum zu einem Temperaturanstieg führt. So können Reifendrücke von Kraftfahrzeugen ohne Reifendrucküberwachungssensoren ermittelt werden.

In einer weiteren Ausführungsform wird bei erfassten oder ermittelten Reifendrücken unterhalb eines Schwellwertes eine Warnmeldung erzeugt. Vorzugsweise wird die Warnmeldung an das Kraftfahrzeug übertragen und/oder auf einer Anzeigeeinheit, wie sie beispielsweise für Stau- oder Richtgeschwindigkeiten bekannt ist, angezeigt. Dabei ist es weiter denkbar, Maßnahmen gegen ein Kraftfahrzeug einzuleiten, das permanent die Reifendruckwarnungen ignoriert. Ein Beispiel könnte sein, dass diesem Fahrzeug an einer Mautstelle das Auffahren untersagt wird, bis der Reifendruck angepasst ist.

In einer weiteren Ausführungsform erfolgt anhand der Signale der Reifendrucküberwachungssensoren eine Klassifikation der Kraftfahrzeuge. Beispielsweise ermöglicht das Verfahren eine Klassifikation nach PKW und LKW. Dies erfolgt über eine geeignete Auswertung des Reifenluftdrucks. Dies ist möglich, da sich der Luftdruck von einem PKW deutlich von dem eines LKWs unterscheidet. So liegt üblicherweise der Reifenluftdruck von PKWs zwischen 1,9 bar bis 3,3 bar und der von LKWs zwischen 4,5 bar bis 9,5 bar. Da darüber hinaus, üblicherweise jeder Reifen eines Kraftfahrzeuges mit Reifendrucküberwachungssystem einen Reifendrucküberwachungssensor aufweist, kann aus der Anzahl der Reifen auf die Anzahl der Achsen geschlossen werden, was eine weitere Unterteilung der Klassifikation erlaubt. Des Weiteren ist es möglich, weitere Sensordaten von dem Kraftfahrzeug bei der Klassifikation zu berücksichtigen. Diese Sensoren können sowohl kraftfahrzeugseitig angeordnet sein oder aber entlang des Verkehrsnetzes angeordnet sein. Des Weiteren erlaubt die Klassifikation auch eine Ahndung von Verkehrsverstößen, beispielsweise dass ein detektierter LKW sich nicht an ein LKW-Verbot für bestimmte Straßen hält. Dabei können Sondergenehmigungen für LKWs dadurch erteilt werden, dass den Empfangseinheiten die Kennung bzw. ID des betroffenen LKWs vorab mitgeteilt wird.
In einer weiteren Ausführungsform werden die Signale aller Reifendrucküberwachungssensoren eines Kraftfahrzeugs erfasst und zur Wiedererkennung des Kraftfahrzeugs verwendet. Neben der Kennung erlaubt dies eine sicherere Wiedererkennung der Kraftfahrzeuge durch Auswertung der Luftdrücke der beispielsweise vier Reifen.

In einer weiteren Ausführungsform wird aus den erfassten Reifendrücken auf die Beladung bzw. Entladung der Kraftfahrzeuge geschlossen. Wird ein Kraftfahrzeug über die Kennung bzw. ID wiedererkannt, werden auch die Reifendrücke miteinander verglichen. Ein höherer Reifendruck lässt den Schluss zu, dass das Kraftfahrzeug schwerer beladen ist. So lassen sich beispielsweise Lieferantenbeziehungen kartieren. Weiter kann dann festgestellt werden, ob beispielsweise der Beladungszustand einen Einfluss auf die Routenwahl hat. Ebenfalls kann so auf den relativen Besetzungsgrad (Anzahl Beifahrer) von PKWs im Vergleich zur ersten Detektion geschlossen werden.

Das Verfahren ermöglicht zudem ein umfassendes Parkraummanagement. So werden ein- und auffahrende Kraftfahrzeuge anhand ihrer Reifendrucküberwachungssensoren erkannt. Zudem können mit Sensoren (Empfangseinheiten) über jeder Parkbucht der Zustand (frei oder belegt) festgestellt werden und vor allem, welches Fahrzeug wo steht. Ebenfalls ist es mit dem Verfahren möglich, eine automatische Zugangskontrolle zu einem Werksgelände einzurichten oder auch die Kennung für Mautabrechnungsverfahren zu verwenden.

In einer weiteren Ausführungsform werden die mobilen Empfangeinheiten Fahrzeugen zugeordnet, die im Verkehr mitschwimmen. Werden Werte von Reifendrucküberwachungssensoren von den mobilen Empfangseinheiten empfangen, dann werden diese mit einem Positionssignal, vorzugsweise einer GPS-Position, versehen und über einen drahtlosen Kommunikationskanal an die Zentrale zur Auswertung übermittelt und zusammen mit den Werten der lokalen Messungen ausgewertet. Diese Ausführungsform sieht beispielsweise vor, Taxi-FCD-Flotten oder andere Firmenflotten mit einer TPMS-Empfangs- und Sendeeinheit auszustatten. Mit der Sendeeinheit ist ebenfalls die Aussendung eines Triggersignals vorgesehen, durch das im Sendebereich befindliche Reifendrucküberwachungssensoren zur Datenübertragung veranlasst werden.

Die Erfindung wird nachfolgend anhand eines bevorzugten Ausführungsbeispiels näher erläutert. Die einzige Figur zeigt ein schematisches Blockschaltbild einer Vorrichtung zur Detektion von Kraftfahrzeugen.

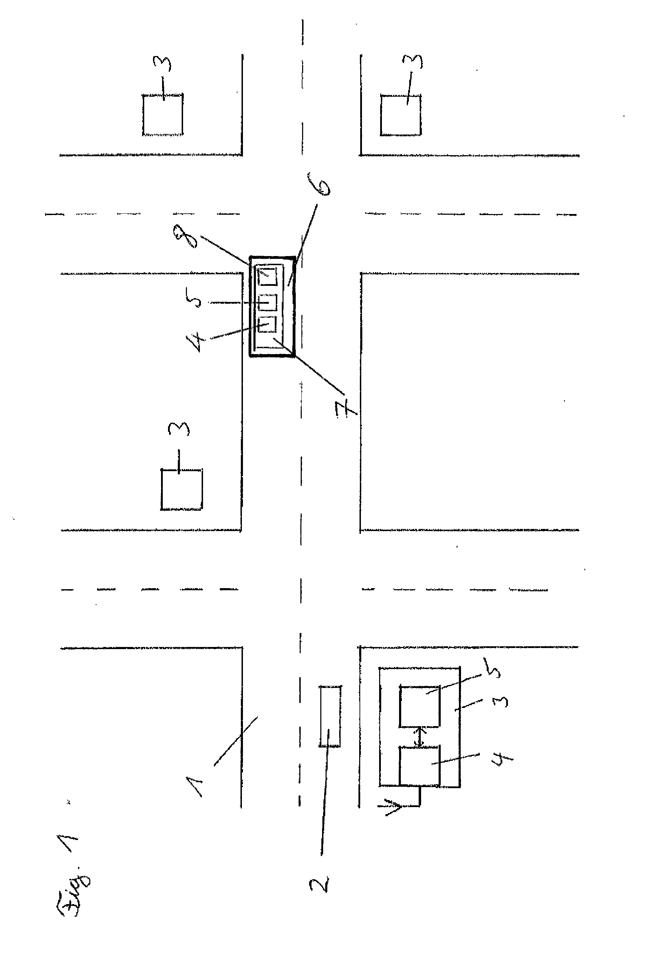

In der Fig. 1 ist ein Teil eines Verkehrsnetzes 1 mit zwei Kreuzungen dargestellt. In dem Verkehrsnetz 1 bewegt sich ein Kraftfahrzeug 2, das mit einem Reifendrucküberwachungssystem ausgerüstet ist. Das Reifendrucküberwachungssystem umfasst eine im Kraftfahrzeug 2 angeordnete Empfangseinheit sowie den einzelnen Reifen zugeordnete Reifendrucküberwachungssensoren. Die Reifendrucküberwachungssensoren erfassen den Reifendruck und die Temperatur und übertragen diese mit einer Kennung des Reifens mittels einer Sendeeinheit drahtlos an die fahrzeugseitige Empfangseinheit. Die Energieversorgung der Sendeeinheiten der Reifendrucküberwachungssensoren kann dabei durch eine Batterie erfolgen. Alternativ kann ein Piezokristall oder ein Schüttel-Generator elektrische Spannung erzeugen. Die fahrzeugseitige Empfangseinheit kann auch mit einer Sendeeinheit ausgebildet sein, um den Reifendrucküberwachungssensoren Steuersignale zu übermitteln, beispielsweise die Frequenz, mit der die Daten periodisch übertragen werden sollen. Entsprechend ist dann die jeweilige Sendeeinheit der Reifendrucküberwachungssensoren mit einer Empfangseinheit ausgebildet. Die fahrzeugseitige Empfangseinheit übermittelt die empfangenen Daten der Reifendrucküberwachungssensoren an eine Auswerteeinheit, wo diese ausgewertet und im Kraftfahrzeug 2 zur Anzeige gebracht werden.

Entlang des Verkehrsnetzes 1 sind lokale Empfangseinheiten 3 angeordnet. Diese Empfangseinheiten 3 weisen jeweils eine Sende-/Empfangsstufe 4 und eine Auswerte- und Steuereinheit 5 auf. Die Sende-/Empfangsstufen 4 sind dabei derart ausgebildet, dass diese die Datenübertragung zwischen den Reifendrucküberwachungssensoren und der fahrzeugseitigen Empfangseinheit empfangen können. Vorzugsweise senden die Reifendrucküberwachungssensoren dabei in einem Frequenzbereich von 300 bis 400 MHz. Die lokalen Empfangseinheiten weisen weiter nicht näher dargestellte Demodulations- und Dekodierschaltungen auf, um aus den empfangenen Signalen die Daten Kennung bzw. ID sowie Reifendruck und gegebenenfalls Temperatur zu extrahieren. Dabei sei angemerkt, dass in einer einfachsten Ausführungsform nur die Kennung ausgewertet wird. Somit kann eine lokale Empfangseinheit 3 ein Kraftfahrzeug detektieren, wenn dieses im Empfangsbereich der Empfangseinheit 3 ist.

Da die Reifendrucküberwachungssensoren nicht kontinuierlich, sondern periodisch senden, sind Fälle denkbar, wo ein Kraftfahrzeug 2 in der Sendepause seiner Reifendrucküberwachungssensoren den Empfangsbereich der Empfangseinheit passiert. Daher kann vorzugsweise mittels der Sende-/Empfangsstufe 4 ein Triggersignal gesendet werden, durch das im Sendebereich befindliche Reifendrucküberwachungssensoren zur Datenübertragung veranlasst werden. Das Triggersignal kann beispielsweise ein LF-Signal im Bereich von 125 kHz sein.

Nachdem ein Kraftfahrzeug 2 erkannt wurde, ist es für eine Routenverfolgung oder Ähnliches notwendig, dass das Kraftfahrzeug 2 wiedererkannt wird. Hierzu können die Empfangseinheiten 3 prinzipiell lokal miteinander Daten austauschen. Vorzugsweise übertragen die Empfangseinheiten 3 jedoch ihre Daten an eine Zentrale. Die Übertragung dieser Daten an die Zentrale erfolgt dabei vorzugsweise drahtlos. Die Zentrale kann dann anhand der Daten aller Empfangseinheiten 3 ein Kraftfahrzeug verfolgen und daraus andere Verkehrsparameter bestimmen.

Des Weiteren bewegt sich in Fig. 1 ein Kraftfahrzeug 6, das mit einer mobilen Empfangseinheit 7, die ähnlich zu der der lokalen Empfangseinheit 3 mit einer Sende-/ Empfangsstufe 4 und einer Auswerte- und Steuereinheit 5 ausgestattet ist. Die mobile Empfangseinheit 7 weist jedoch zusätzlich eine Positionseinheit 8 zur Bestimmung der Fahrzeugposition auf, beispielsweise eine GPS-Positionseinheit. Die Einheiten 4 und 5 funktionieren in ähnlicher Art und Weise wie bei der lokalen Empfangseinheit 3 und weisen nicht näher dargestellte Demodulations- und Dekodierschaltungen auf, um aus den empfangenen Signalen die Daten Kennung bzw. ID sowie Reifendruck und gegebenenfalls Temperatur zu extrahieren. Die aus den empfangen Signalen gewonnen Daten werden mit einer zum Zeitpunkt der Detektion mit einer GPS-Position versehen. Die Daten werden dann vorzugsweise wie bei den Empfangseinheiten 3 weiterverarbeitet.

Die Energieversorgung der lokalen Empfangseinheiten kann über Batterien und/oder Solarmodule erfolgen. Es ist auch denkbar, diese an eine vorhandene Infrastruktur wie beispielsweise die elektrische Energieversorgung einer Lichtsignalanlage anzuschließen.

## Patentansprüche

1. Verfahren zur Detektion von Kraftfahrzeugen in einem Verkehrsnetz, wobei die Kraftfahrzeuge mindestens teilweise mit Reifendrucküberwachungssensoren ausgebildet sind,
**dadurch gekennzeichnet, dass**
entlang des Verkehrsnetzes (1) lokale Empfangseinheiten (3) für die Signale der Reifendrucküberwachungssensoren angeordnet sind und/oder mobile Empfangseinheiten (7) sich im Verkehrsnetz (1) bewegen und Signale der Reifendrucküberwachungssensoren der Kraftfahrzeuge (2) erfassen, wobei anhand der Signale die Kraftfahrzeuge (2) detektiert und mindestens ein Verkehrsparameter ermittelt wird.

2. Verfahren nach Anspruch 1, **dadurch gekennzeichnet, dass** die Empfangseinheiten (3, 7) untereinander und/oder über eine Zentrale miteinander vernetzt sind, wobei aus den Signalen der Reifendrucküberwachungssensoren eine Kennung eines Kraftfahrzeuges (2) ermittelbar ist, wobei durch eine Nachverfolgung der Kennung durch die Empfangseinheiten (3) eine Route des Kraftfahrzeuges (2) ermittelbar ist.

3. Verfahren nach Anspruch 1 oder 2, **dadurch gekennzeichnet, dass** den Empfangseinheiten (3, 7) Sendeeinheiten zugeordnet sind, die ein Triggersignal an die Reifendrucküberwachungssensoren übertragen, damit diese ihre Daten übertragen.

4. Verfahren nach einem der vorangegangenen Ansprüche, **dadurch gekennzeichnet, dass** den Empfangseinheiten (3) Infrarot-Sensoren zur Erfassung einer Reifendrucktemperatur zugeordnet sind.

5. Verfahren nach einem der vorangegangenen Ansprüche, **dadurch gekennzeichnet, dass** bei erfassten oder ermittelten Reifendrücken unterhalb eines Schwellwertes eine Warnmeldung erzeugt wird.

6. Verfahren nach Anspruch 5, **dadurch gekennzeichnet, dass** die Warnmeldung an das Kraftfahrzeug (2) übertragen wird und/oder auf einer Anzeigeeinheit dargestellt wird.

7. Verfahren nach einem der vorangegangenen Ansprüche, **dadurch gekennzeichnet, dass** anhand der Signale der Reifendrucküberwachungssensoren eine Klassifikation der Kraftfahrzeuge (2) erfolgt.

8. Verfahren nach einem der vorangegangenen Ansprüche, **dadurch gekennzeichnet, dass** die Signale aller Reifendrucküberwachungssensoren eines Kraftfahrzeuges (2) erfasst werden und zur Wedererkennung des Kraftfahrzeuges (2) verwendet werden.

9. Verfahren nach einem der vorangegangenen Ansprüche, **dadurch gekennzeichnet, dass** aus den erfassten Reifendrücken auf die Beladung der Kraftfahrzeuge (2) geschlossen wird.

10. Vorrichtung zur Detektion von Kraftfahrzeugen in einem Verkehrsnetz, wobei die Kraftfahrzeuge mindestens teilweise mit Reifendrucküberwachungssensoren ausgebildet sind,
**dadurch gekennzeichnet, dass**
entlang des Verkehrsnetzes (1) lokale Empfangseinheiten (3) für die Signale der Reifendrucküberwachungssensoren angeordnet sind und/oder mobile Empfangseinheiten (7) sich im Verkehrsnetz (1) bewegen und Signale der Reifendrucküberwachungssensoren der Kraftfahrzeuge (2) erfassen, wobei anhand der Signale die Kraftfahrzeuge (2) detektiert und mindestens ein Verkehrsparameter ermittelt wird.
